# EUROPEAN PATENT APPLICATION

(11) **EP 1 359 431 A1**
(43) Date of publication of application: **05.11.2003**
(21) Application number: 02360139.6
(22) Date of filing: 30.04.2002
(51) Int. Cl.: G01S 5/02, H04Q 7/38, G01S 5/00

(54) **Method and corresponding server for determining the position of a moving mobile terminal**

(71) Applicant: ALCATEL, 75008 Paris (FR)
(72) Inventor: Soulie, Antonine, 75014 Paris (FR)
(74) Representative: Urlichs, Stefan, Dipl.-Phys.

(57) **Abstract**

The invention relates to a method and a server for determining the position of a moving mobile terminal (12) in an area.

According to the invention, the method comprises the steps of:
- generating a map of the area, the map indicating timing advance values for different zones of the area;
- receiving timing advance information related to the moving mobile terminal from a serving base station (11);
- upon follow up on the map of said timing advance values related to the moving mobile terminal, determining the position of the moving mobile terminal.
The server executing the steps of the method is connectable in particular to a GSM or UMTS based radio communication network.

## Description

### BACKGROUND OF THE INVENTION

The present invention relates to a method for determining the position of a moving mobile terminal.

Known in the art is a method for determining an identifier of the cell in which a mobile terminal is currently located. This method called Cell Id is relies on the hypothesis that the geographical coverage of a cell corresponds to that predicted by radio studies. It is possible to refine positioning using round trip delay measurements taken by the base station, which measures the time between the transmission of a frame and the reception of the corresponding frame. Using this measurement, the base station can determine the distance to the mobile with an accuracy of about 80m. The accuracy of this positioning method is low but is compatible with the usual hardware and software of a mobile terminal. Indeed, the network measurements used by the positioning method are anyway performed when trying to establish a communication to the mobile network.

Further more sophisticated positioning methods use the perceived synchronization of frames sent by two adjacent base stations. Knowing the real time difference between the base stations, it is possible to retrieve the position of the terminal relatively to the base stations by performing triangulation. Such a method is known under the name OTD (Observed Time Difference). This method is more efficient but has the drawback to require software changes in the terminal and in the network infrastructure.

Another solution consists in integrating a GPS (Global Positioning System) receiver in the mobile terminal and relying completely on the GPS functionality to determine the position of the terminal. This solution is very accurate but requires very expensive hardware modification in the terminal.

A particular object of the present invention is to provide a method for determining the position of a mobile terminal which does not require any hardware or software modification in the mobile terminal itself and which provides a good accuracy.

Another object of the invention is to provide a server adapted to perform several steps of this method.

### SUMMARY OF THE INVENTION

These objects, and others that appear below, are achieved by a method for determining the position of a moving mobile terminal according to claim 1 and a server for determining the position of a moving mobile terminal according to claim 6.

According to the present invention, the method consists in generating a map of the area indicating theoretically computed timing advance values in the different zones of the area. In a second step, timing advanced value related to a moving mobile terminal are checked against the timing advance map and several possible positions of the terminal are determined. After analyzing several successive timing advance values of the moving mobile terminal, the number of possible positions get reduced to a unique position.

The method according to the present invention presents the advantage of being accurate while not necessitating any modification in the mobile terminal hardware or software. As a consequence, this method can be used for cheap mobile terminals.

Further advantageous features of the invention are defined in the dependent claims.

Another advantage of the invention is that accuracy increases with the number of successive considered timing advanced values. This iteration enables it to eliminate erroneous timing advance values.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a radio communication network in which the method according to the present invention can be implemented;
- Figure 2 shows a flow chart illustrating an implementation of the method according to the present invention;
- Figure 3 shows a server for performing several steps of the method according to the present invention.

### DETAILED DESCRIPTION OF THE INVENTION

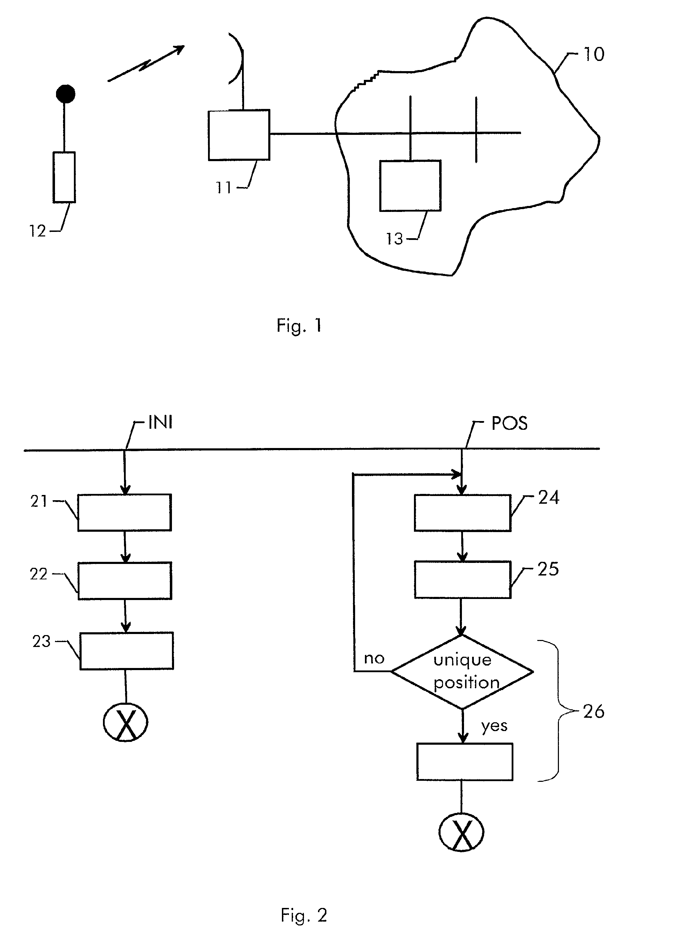

Figure 1 shows a radio communication network in which the method according to the present invention can be implemented. The illustrated radio communication network comprises a core network 10 as for example a GMS usual core network infrastructure based on mobile switching centers (MSC), Home Location Register(HLR). Alternatively, it may be based on any evolution of GSM networks as GPRS, EDGE or UMTS core network. The radio communication network further comprises a base station 11 and a moving mobile terminal 12 located under the range of base station 11. According to the present invention, the radio communication network further comprises a server 13 for determining the position of moving mobile terminal 12. Server 13 may be part of core network 10 or directly connected to base station 11.

In the case server 13 is part of core network 10, this server is preferably responsible for determining the position of moving mobile terminals located under the range of several additional (not represented) base stations.

In the case server 13 is directly coupled to base station 11, there should be as many servers 13 as base stations in the geographic zone where the method for determining the position of moving mobile terminals should be performed.

Base station 11 as usual in GSM/UMTS radio communication network evaluate at regular time interval Timing Advance (TA) values related to mobile terminal 12.

According to the present invention, these Timing Advance values are forwarded to server 13 which determines the position of mobile terminal 12 by checking successive Timing advance values of moving mobile terminal 13 against a previously map of the area indicating the theoretical timing advance values in the different zones of the area. The method for generating the map will be further detailed in relation with figure 2. The step of checking the successive Timing Advance values will also be further detailed in relation with figure 2.

Once the position of moving mobile terminal 12 has been determined, server 13 preferably forwards this information to an element of the radio communication network responsible for providing location based services in order to provide moving mobile terminal 12 with adapted value added location based services, such as, but not restricted to, indications on hotels in the neighborhood.

Figure 2 shows a flow chart illustrating an implementation of the method according to the present invention. This method is preferably executed at server 13 for determining the position of a moving mobile terminal.

Firstly, the method comprises an initialization phase (INI) consisting in generating a map of a predefined area indicating theoretically calculated Timing Advance values that would affect a mobile terminal in different zones of the area. In a preferred embodiment, the initialization phase INI is subdivided in following steps:
Step 21 consists in determining a plurality of paths in the predefined area. These paths are preferably roads or streets which are likely to be followed by a moving mobile terminal. These paths are marked on the generated map
Step 22 consists in computing a theoretical timing advance value for a plurality of points belonging to the selected paths. The theoretical Timing Advance values should preferably take into account the urban density factor between the base station and the point for which a theoretical Timing Advance value should be calculated. Indeed, depending on the fact if a clear line of sight is available or not between the base station and the point for which a Timing Advance value is sought, the influence of multipath propagation should be considered.
   The value by which the Timing Advance value should be increased if no clear line of sight is available is computed according to the urban density taking into account the average height of the buildings as well as the average space between the buildings.
Step 23 consists in determining on the map points having identical timing advance values This points build lines of identical timing advance values. A predefined increment of time may be chosen between the lines. Alternatively, instead of lines, zones having a Timing Advance comprised in a predefined margin [TAref, TAref+TAmargin] may also be represented on the map.

After the initialization phase INI, a position determination phase POS is started. Preferably, the initialization phase is performed only once and then position determination phases for several moving mobile terminal are performed based on the same map generated during the initialization phase.

The position determination phase POS may, in a preferred embodiment, comprise following steps:
Step 24: receiving for a moving mobile terminal which position has to be determined an information related to its timing advance value from its serving base station. This value is periodically measured and sent over the air interface by the serving base station to the mobile for him to get appropriately synchronized with the base station. According to the present invention, the serving base station should also forward a message containing an identifier of the moving mobile terminal and its related timing Advance value to the entity performing the position determination phase. This entity is preferably server 13.
Step 25 consists, upon reception of a timing advance value, in determining all possible map areas showing the same timing advance value.
Step 26 consists in selecting among the different possible solutions the unique appropriate one. For this purpose, as many successive timing advance value as necessary are taken into account and the corresponding maps area are also determined. The only appropriate position of the moving mobile terminal is obtained when consecutive timing advance values corresponds to a unique possible followed path. Criteria for a possible followed path is the distance between two points on the map corresponding to two successive received timing advance value as well as the following of an existing road or street.

In a preferred embodiment of the invention, a weighting coefficient may be attributed to each calculated position depending on the likelihood of a position.

The man skilled in the art may envisage several criteria which give a coefficient of likelihood to the position.

In a preferred embodiment of the present invention, a pattern refinement phase (not represented on figure 2) may follow the position evaluation phase POS. This pattern refinement phase is dedicated to

improve the quality of the map containing the theoretically calculated timing advance value. The improvement is based on the real measured values received for a moving mobile terminal. Once a unique possible position is identified for the mobile, the timing advance value received from the mobile is used to replace the theoretically calculated value for this point on the map. This presents the advantage to improve continuously the precision of the map containing the timing advance values.

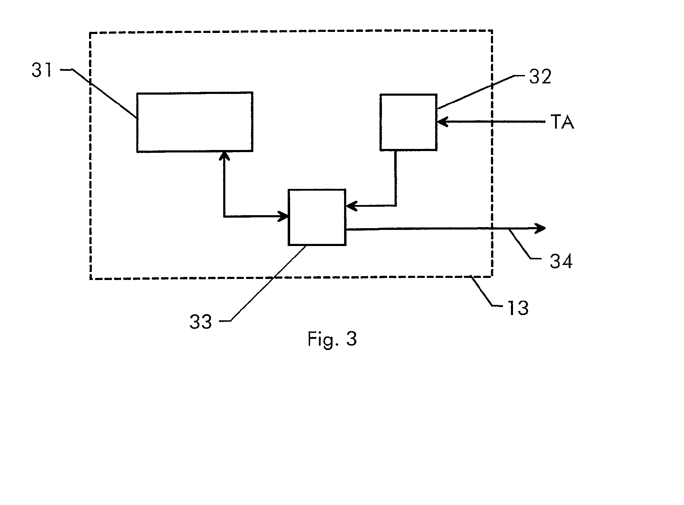

Figure 3 shows an embodiment of server 13 for performing the steps of the method according to the present invention.

Server 13 comprises means 31 for generating a map of a predefined area, the map indicating timing advance values for the different zone of the area. In a preferred embodiment of the invention, means 31 may be based on a simulation program taking as input a geographical map of the predefined area and parameter as the urban density, the average distance between the buildings, the average height of the buildings, the position of the serving base stations. As output the simulation program generates for predefined paths on the map theoretically calculated timing advance values.

Server 13 further comprises means 32 for receiving from a base station timing advance information related to a moving mobile terminal and means 33 for determining the position of moving mobile terminal consisting in a central processing unit.

Timing advance information received at means 32 are forwarded to means 33. Means 33 are further connected to means 31. A request is made from means 33 to means 31 to extract out of the map stored at means 31 the possible position of the mobile terminal having the received timing advance value. Means 33 further control the iteration consisting in processing and waiting for as many successive timing advance value as necessary to reduce the number of possible positions to a single one. Further means 33 are responsible for estimating the reliability of the found positions.

The position determined at means 33 are forwarded on an interface 34 to an entity providing location based services.

In a preferred embodiment of the invention, means 33 for determining the position of a moving mobile terminal communicates to means 31 for generating a map indicating timing advance information in order to refine using a loop back mechanism the theoretical calculated timing advance values.

## Claims

1. Method for determining the position of a moving mobile terminal (12) in an area, said method comprising the steps of:
- generating a map of said area, said map indicating timing advance values for different zones of said area;
- receiving timing advance information related to said moving mobile (12) terminal from a serving base station (11),
- upon follow up on said map of said timing advance values related to said moving mobile terminal (12), determining the position of said moving mobile terminal (12).

2. Method according to claim 1, wherein the step of generating said map includes:
- the determination of a plurality of paths in said area; and
- the computation of a theoretical timing advance information on a plurality of points belonging to said path, taking into account an urban density factor;
- the determination of areas having identical timing advance values.

3. Method according to claim 1, wherein the follow up of the timing advance value includes:
- mapping consecutive timing advance information for said moving mobile terminal (12) on said map until an unique timing advance area is identified;

4. Method according to claim 1, further comprising the steps of:
- attributing a weighting coefficient to each of said successive timing advance value received for said moving mobile terminal (12);
- modifying said theoretical timing advance value in accordance with said weighting coefficients.

5. Method according to claim 1, further comprising the step of sorting the possible locations of the mobile by decreasing likelihood.

6. Server (13) for determining the position of a moving mobile terminal (12) in an area, said server comprising:
- means for generating a map of said area, said map indicating timing advance values for the different zones of said area;
- means for receiving timing advance information related to said moving mobile terminal (12) from a base station (11); and
- means for determining the position of said moving mobile terminal (12) on said map upon follow up of said timing advance values related to said moving mobile terminal (12).

7. Server (13) according to claim 6, connectable to a radio communication network (10) to which said moving mobile terminal (12) is also connectable to.

8. Server (13) according to claim 6, connectable to a GSM or UMTS based radio communication network.
